# EUROPÄISCHE PATENTSCHRIFT

(11) **EP 1 028 050 B1**
(45) Veröffentlichungstag und Bekanntmachung des Hinweises auf die Patenterteilung: **05.07.2006**
(21) Anmeldenummer: 00102623.6
(22) Anmeldetag: 08.02.2000
(51) Int. Cl.: B62D 25/08, B62D 65/06, B60R 21/13

(54) **Cabriolet mit Verdeck und Überrollbügel**
Convertible vehicle with soft top and roll bar
Cabriolet comportant une capote et un arceau de sécurité

(30) Priorität: 11.02.1999 DE 19905578
(43) Veröffentlichungstag der Anmeldung: 16.08.2000
(73) Patentinhaber: Bayerische Motoren Werke Aktiengesellschaft, 80809 München (DE)
(72) Erfinder: Premm, Günther, 85591 Vaterstetten (DE); Schröder, Burkhard, 48336 Sassenberg (DE); Dangl, Wolfgang, 85375 Neufahrn (DE); Pedersen, Roald, 2818 Gjovik (NO)

(56) Entgegenhaltungen:
- EP-A- 0 676 317
- EP-A- 0 722 859
- EP-A- 0 965 470
- DE-A- 3 925 513
- DE-A- 4 116 223
- DE-A- 19 642 821

## Beschreibung

Die Erfindung bezieht sich auf ein Cabriolet mit einem zusammenklappbaren Verdeck und wenigstens einem Überrollbügel, der an einer am Fahrzeugaufbau befestigbaren Grundplatte angeordnet ist. Ein derartiges Cabriolet mit den Merkmalen des Oberbegriffs der Anspruchs 1 ist aus der Patentschrift EP-A-0 772 859 bekannt.

Bei einem weiteren bekannten Cabriolet (DE 39 25 513 C2) sind an einer Grundplatte zwei von einer abgesenkten Ruhelage in eine aufgerichtete Stützlage verschwenkbare Überrollbügel angeordnet. Die Überrollbügel, die Antriebsvorrichtungen für diese Bügel sowie die Halte- und Verriegelungseinrichtungen können außerhalb des Fahrzeugs eingebaut und einjustiert werden. Die so aufgebaute Baugruppe wird sodann in einen im Karosseriekörper vorgesehen Schacht eingeführt und dort befestigt.

Es ist ferner weithin üblich (beispielsweise DE 44 43 405 A1), das Verdeck eines Cabriolets in der Weise mit dem übrigen Karosseriekörper zu verbinden, daß Konsolen, an denen zumindest der hintere Spannbügel und die Hauptsäule des Verdeckgestänges angelenkt sind, in entsprechenden am Karosseriekörper eigens auszubildenden Aufnahmen befestigt und einjustiert werden.

Der Erfindung liegt die Aufgabe zugrunde, in einer gewicht- und bauraumsparenden Bauweise und mit weniger Montageaufwand ein Cabriolet der vorausgesetzen Bauart zu schaffen.

Diese Aufgabe wird erfindungsgemäß durch die im Patentanspruch 1 angegebenen Merkmale gelöst.

Weitere vorteilhafte Einzelheiten der Erfindung sind Gegenstand der abhängigen Ansprüche 2 bis 14.

Durch die Verwendung der Trennwand gleichzeitig als Montageplatte für das Überrollschutzsystem, ggf. auch noch für das gesamte Verdeck, zusätzlich zu der ihr üblicherweise zukommenden Funktion, den Fahrgastraum vom Kofferraum zu trennen, ergibt sich eine ganz erhebliche Gewichtsersparnis. Weiterhin kann das gesamte Überrollschutzsystem auf der Trennwand befestigt, einjustiert und unter Umständen sogar getestet werden, bevor das gesamte System in das Fahrzeug eingebaut wird. Nach einer soliden Befestigung im restlichen Fahrzeugaufbau ist die übliche Festigkeit und Steifigkeit der Karosserie nicht beeinträchtigt.

Sieht man an der Trennwand Lagerböcke vor, an denen auch die Konsolen des Verdeckgestänges befestigbar und einjustierbar sind, kann außer dem Überrollschutzsystem auch noch das Verdeck vormontiert werden. Nach dem Einsetzen der gesamten Baugruppe sind nur mehr geringe Justiervorgänge nötig, um volle Funktion und Dichtigkeit des Verdecks zu gewährleisten. Darüber hinaus kann z. B. dann, wenn die Trennwand mit dem restlichen Karosseriekörper nur verschraubt wird, das gesamte Überrollschutzsystem mit Verdeck gemeinsam aus dem Fahrzeug auch wieder entfernt werden, wenn beispielsweise ein Hardtop montiert wird. Es gibt sich dann ein ganz erheblicher Zugewinn an Kofferraumvolumen sowie eine verbesserte Durchlademöglichkeit. Außerdem läßt sich hierdurch bei aufgesetztem Hardtop durch den Wegfall des sonst im Fahrzeug verbleibenden Überrollschutzsystem und des Verdecks eine hohe Reduzierung des Gesamtgewichts erreichen.

Weitere vorteilhafte Einzelheiten der Erfindung, die Gegenstand von weiteren Unteransprüchen sind, sind im folgenden anhand mehrerer in der Zeichnung dargestellter Ausführungsbeispiele erläutert. Es zeigt
- Fig. 1: eine perspektivische Darstellung eines ersten Ausführungsbeispiels einer mit dem Karosseriekörper eines Cabriolets verbindbaren Trennwand;
- Fig. 2: unten eine der Fig. 1 entsprechende Darstellung eines weiteren Ausführungsbeispiels einer Trennwand mit einem darüber teilweise angedeuteten Klapp-Verdeck und
- Fig. 3: eine der Fig. 1 entsprechende Ausführungsform einer Trennwand in einer nochmals abgewandelten Bauart.

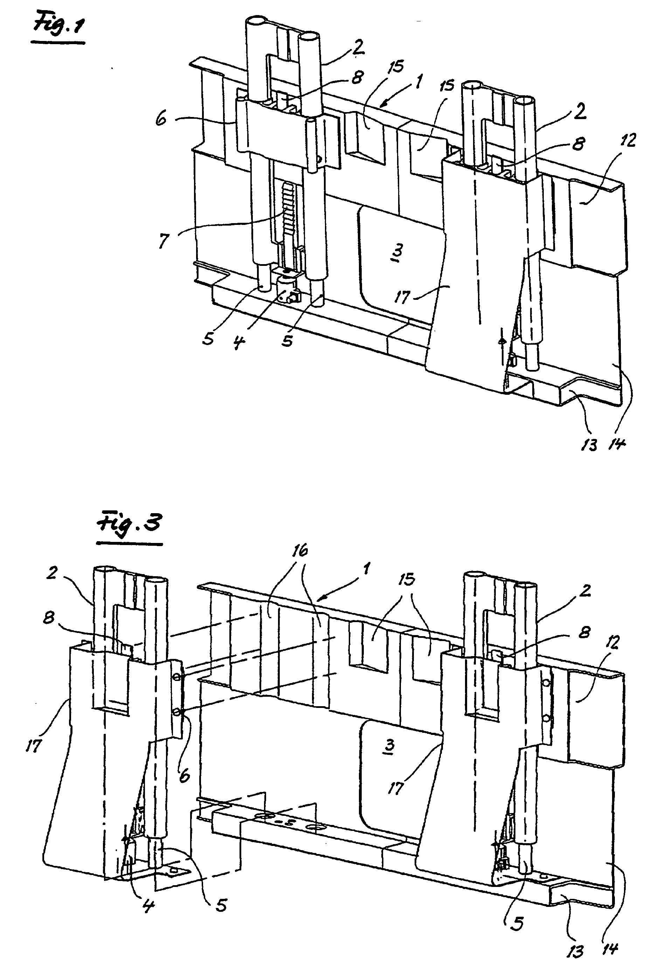

In Fig. 1 der Zeichnung ist in einer perspektivischen Ansicht eine Trennwand 1 dargestellt, die mit zwei translatorisch von der dargestellten unteren Position in eine (nicht dargestellte) obere Position verlagerbaren Überrollbügeln 2 versehen ist. Die Überrollbügel bestehen jeweils aus Strangpreßprofilen, wobei der mittlere Stegabschnitt zwischen zwei äußeren Rohren zwischen einem oberen und einem unteren Quersteg herausgeschnitten worden ist. Die Trennwand 1 trennt im eingebauten Zustand den Fahrgastraum von dem Kofferraum eines Cabriolets. Anstelle derverlagerbaren Überrollbügel 2 könnten auch feststehende Überrollbügel an der Trennwand 1 befestigt sein.

Die Trennwand 1 wird nach Montage der Überrollbügel 2, inklusive der Führungselemente für die verlagerbaren Bügel 2, der Halteelemente sowie der Verriegelungselemente, außerhalb des Karosseriekörpers des Cabriolets vormontiert und einjustiert und dann als Modul in den Karosseriekörper eingesetzt.

Zum Halten der Überrollbügel 2 in ihrer abgesenkten Ruhelage ist ein elektromagnetisch betätigbarer Aktuator 4 vorgesehen, der einen mit diesem zusammenwirkenden am Überrollbügel 2 befestigten Haltestift freigibt, wenn eine Überschlagssituation detektiert wird. In der ausgefahrenen Wirkstellung verrastet eine unten mit Überrollbügeln 2 verbundene Zahnleiste 7 mit einer lediglich angedeuteten federbelasteten Sperrklinke 8.

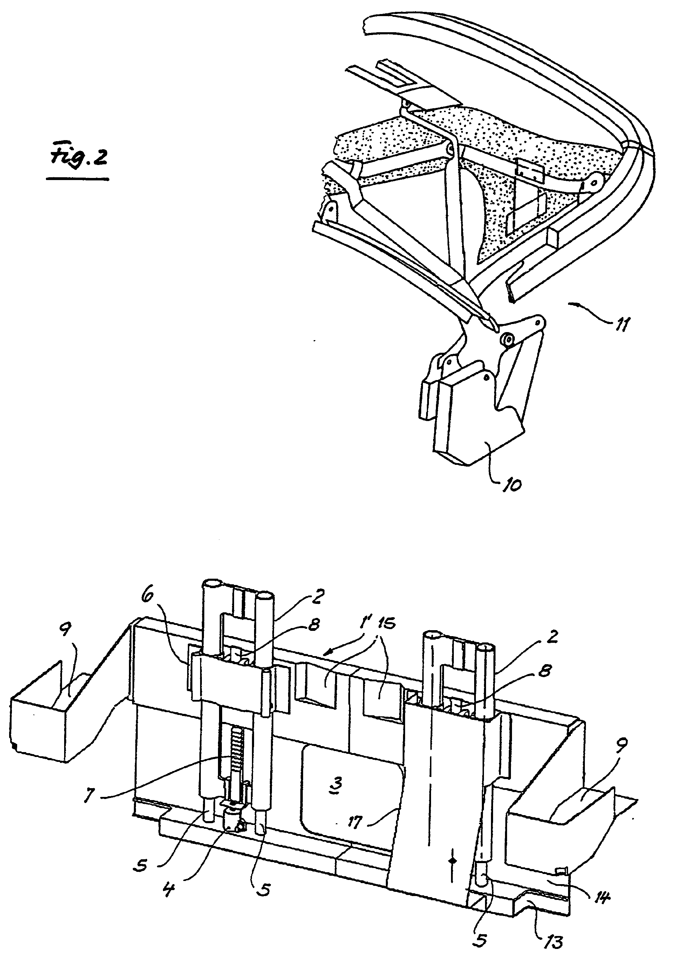

Beim Ausführungsbeispiel nach Fig. 2 ist die Trennwand 1' mit seitlichen Lagerböcken 9 versehen, mit denen die Trennwand 1' mit dem (nicht dargestellten) Fahrzeugaufbau verbindbar ist. Die Lagerböcke 9 können hierbei höhenverstellbar an der Trennwand 1' angeordnet sein. Die Trennwand 1' wird mittels einer Lehre in den Karosseriekörper eingesetzt, so daß die Montage am Band äußerst schnell durchführbar ist.

An den Lagerböcken 9 sind zweckmäßig auch Konsolen 10 eines in Fig. 2 oben angedeuteten Verdeckgestänges 11 befestigbar. Die Konsolen 10 sind gegenüber den Lagerböcken 9 in Querrichtung und in Längsrichtung des Fahrzeuges einjustierbar und dann festlegbar.

Die Trennwand 1 bzw. 1' ist zweckmäßig aus wenigstens einem Leichtmetall-Strangpreßprofil gebildet. Man erkennt obere und untere Hohlkammern 12 bzw. 13 und einen dazwischenliegenden Wandbereich 14. Insbesondere die vordere Wandung der oberen Hohlkammer 12 ist bereichsweise verformt, um beispielsweise raumsparend und belastungsgerecht Aufnahmen 15 für Gurtaufroll-Automaten zu erhalten. Zur Führung der Überrollbügel 2 im oberen Bereich der Trennwand können beispielsweise in die vordere Wand der oberen Kammer rinnenförmige Einprägungen 16 eingearbeitet sein, die dann zusammen mit korrespondierenden Profilbereichen der schon erwähnten Verstärkungsblöcke 6 die beiden Rohre der Überrollbügel 2 so umgeben, daß die Bügel 2 ohne größeren Widerstand verschiebbar geführt sind.

Die Trennwand 1 bzw. 1' kann mit dem Fahrzeugaufbau verschraubt, geclincht oder auch verschweißt sein. Ist sie mit dem restlichen Fahrzeugaufbau verschraubt, kann die Trennwand dann, wenn das Cabriolet mit einem Hardtop versehen werden soll, zusammen mit dem ganzen Überrollbügelsystem und dem Verdeck aus dem Fahrzeug entnommen werden, mit den weiter oben schon erläuterten Vorteilen.

Bei der in Fig. 1 erkennbaren Bauweise werden die Überrollbügel 2, die Standrohre 5, die Aktuatoren 4 und die Verstärkungsblöcke 6 außerhalb des Fahrzeug-Körpers mit der Trennwand 1 zu einem Modul zusammengefügt. Jeder Verstärkungsblock 6 ist dabei von einem vorderen Gehäuseteil 17 umgeben, der mit der Trennwand 1 fest verbunden ist. An dem Gehäuseteil 17 ist ein unterer Abschnitt mit einer Neigung vorgesehen, der zur Abstützung der Rückenlehne eines Fahrzeugsitzes dient. An dem Gehäuseteil 17 sind die Elektronik-Komponenten des Überrollsystems und ggf. auch des Verdecksystems angeordnet.

Bei der Bauweise nach Fig. 3 ist eine andere Montagefolge vorgesehen: Zunächst wird die Trennwand 1 ohne Anbauten in den Fahrzeug-Körper eingesetzt, beispielsweise durch Schweißen, Schrauben oder Clinchen. An dem schon erwähnten Gehäuseteil 17 werden die Überrollbügel 2 vormontiert, ebenfalls die Standrohre 5, der Aktuator 4 und der die Sperrklinke 8 lagernde Verstärkungsblock 6. Nach genauerer Justierung und Prüfung der eben erwähnten Elemente wird dann das mit diesen Elementen ausgestattete Gehäuseteil 17 in wenigen Montageschritten mit der schon im Fahrzeug befindlichen Trennwand 1 verbunden.

## Patentansprüche

1. Cabriolet mit einem zusammenklappbaren Verdeck und wenigstens einem im wesentlichen translatorisch aus der abgesenkten Ruhelage in eine nach oben gerichtete verriegelte Stützlage verlagerbaren Überrollbügel, der an einer am Fahrzeugaufbau befestigbaren Grundplatte angeordnet ist, wobei die Grundplatte durch die zwischen dem Fahrgastraum und dem Kofferraum angeordnete Trennwand gebildet ist,
**dadurch gekennzeichnet, daß** die Trennwand (1) mit dem Überrollbügel (2), dessen Haltevorrichtung, dessen Stellelemente und/oder dessen Verriegelungsvorrichtung eine vormontierbare Einheit bildet, derart, dass die genannten Bauteile des Überrollschutzsystems außerhalb des Fahrzeugs mit der Trennwand (6) zu einem Modul zusammengefügt werden.

2. Cabriolet nach Anspruch 1,
**dadurch gekennzeichnet, daß** die Trennwand (1') über seitliche Lagerböcke (9) mit dem Fahrzeugaufbau verbindbar ist.

3. Cabriolet nach Anspruch 2,
**dadurch gekennzeichnet, daß** die Lagerböcke (9) höhenverstellbar an der Trennwand (1') angeordnet sind.

4. Cabriolet nach Anspruch 3,
**dadurch gekennzeichnet, daß** an den Lagerböcken (9) Konsolen (10) des Verdeckgestänges (11) befestigbar sind.

5. Cabriolet nach Anspruch 4,
**dadurch gekennzeichnet, daß** die Konsolen (10) gegenüber den Lagerböcken (9) in Querrichtung und/oder in Längsrichtung des Fahrzeugs verstellbar sind.

6. Cabriolet nach Anspruch 1,
**dadurch gekennzeichnet, daß** die Trennwand (1, 1') aus wenigstens einem Leichtmetall-Strangpreßprofil gebildet ist.

7. Cabriolet nach Anspruch 1,
**dadurch gekennzeichnet, daß** die Trennwand (1, 1') mit dem Fahrzeugaufbau verschraubt, geclincht und/oder verschweißt ist.

8. Cabriolet nach Anspruch 4 und Anspruch 7,
**dadurch gekennzeichnet, daß** die Trennwand (1, 1') zusammen mit dem Überrollsystem und dem Verdeck aus dem Fahrzeug entfernbar ist.

9. Cabriolet nach Anspruch 6, bei dem die Schenkel eines Überrollbügels (2) in Führungselementen verlagerbar sind, **dadurch gekennzeichnet, daß** die Führungselemente durch Einprägungen (16) in der Trennwand (1) und durch Verstärkungsblöcke (6) gebildet werden, die an der Trennwand (1) befestigt sind.

10. Cabriolet nach Anspruch 6,
**dadurch gekennzeichnet, daß** an der Trennwand (1, 1') Aufnahmen (15) für Gurtaufroll-Automaten ausgebildet sind.

11. Cabriolet nach Anspruch 9,
**dadurch gekennzeichnet, daß** jeder Verstärkungsblock (6) von einem vorderen Gehäuseteil (17) umgeben ist, der mit der Trennwand (1, 1') fest verbunden ist.

12. Cabriolet nach Anspruch 11,
**dadurch gekennzeichnet, daß** das Gehäuseteil (17) mit einem unteren Abschnitt zur Abstützung der Rückenlehne eines Fahrzeugsitzes dient.

13. Cabriolet nach Anspruch 11,
**dadurch gekennzeichnet, daß** an dem Gehäuseteil (17) die Elektrikkomponenten des Überrollsystems und ggf. auch des Verdecksystems angeordnet sind.

14. Cabriolet nach Anspruch 9,
**dadurch gekennzeichnet, daß** das Überrollsystem mit dem vorderen Gehäuseteil (17) vormontierbar ist, das dann an der Trennwand (1) befestigt wird.

## Claims

1. A convertible with a foldable top and at least one roll bar movable substantially in translation from the lowered inoperative position into an upwardly directed locked staying position and mounted on a baseplate fastened to the vehicle body, wherein the baseplate is formed by the bulkhead between the passenger compartment and the luggage space,
**characterised in that** the bulkhead (1) together with the roll bar (2) and the means for holding, adjusting and/or locking it forms a preassembled unit such that the said components of the roll-over protective system and the bulkhead (6) are fitted together to form a module outside the vehicle.

2. A convertible according to claim 1,
**characterised in that** the partition (1') is connectable to the vehicle body via lateral bearing blocks (9).

3. A convertible according to claim 2,
**characterised in that** the bearing blocks (9) are vertically adjustable on the bulkhead (1').

4. A convertible according to claim 3,
**characterised in that** brackets (10) on the soft-top linkage (11) can be fastened to the bearing blocks (9).

5. A convertible according to claim 4,
**characterised in that** the brackets (10) are adjustable relative to the bearing blocks (9) in the transverse and/or longitudinal direction of the vehicle.

6. A convertible according to claim 1,
**characterised in that** the bulkhead (1, 1') is made from at least one light-metal extruded profile.

7. A convertible according to claim 1, **characterised in that** the bulkhead (1, 1') is screwed, clinched and/or welded to the vehicle body.

8. A convertible according to claim 4 and claim 7,
**characterised in that** the partitions (1, 1') together with the roll-over protective system and the top is removable from the vehicle.

9. A convertible according to claim 6, wherein the limbs of a roll bar (2) are movable in guide elements, **characterised in that** the guide elements are formed by indentations (16) in the bulkhead (1) and by reinforcing blocks (6) fastened to the bulkhead (1).

10. A convertible according to claim 6,
**characterised in that** recesses (15) for automatic belt retractors are formed on the bulkhead (1, 1').

11. A convertible according to claim 9,
**characterised in that** each reinforcing block (6) is surrounded by a front casing part (17) firmly connected to the bulkhead (1, 1').

12. A convertible according to claim 11,
**characterised in that** the casing part (17) has a bottom portion for bracing the back of a vehicle seat.

13. A convertible according to claim 11,
**characterised in that** the electric components of the roll-over protective system and also of the soft-top system if required are disposed on the casing part (17).

14. A convertible according to claim 9,
**characterised in that** the roll-over protective system can be preassembled together with the front casing part (17) and then fastened to the bulkhead (1).

## Revendications

1. Cabriolet ayant une capote rabattable et au moins un arceau de sécurité, déplaçable en translation d'une position de repos inférieure à une position de soutien verrouillée dirigée vers le haut, qui est disposé sur une plaque de base pouvant être fixée sur une structure de véhicule, la plaque de base étant formée par la paroi de séparation disposée entre l'habitacle et le coffre,
**caractérisé en ce que**
la paroi de séparation (1) avec l'arceau de sécurité (2), son dispositif de support, son élément de réglage et/ou son dispositif de verrouillage forme une unité pouvant être préassemblée, de telle manière que les pièces du système de protection contre le renversement soient assemblées avec la paroi de séparation (1) en un module à l'extérieur du véhicule.

2. Cabriolet selon la revendication 1,
**caractérisé en ce que**
la paroi de séparation (1') peut être assemblée à la structure du véhicule au moyen de blocs d'appui latéraux (9).

3. Cabriolet selon la revendication 2,
**caractérisé en ce que**
les blocs d'appui (9) sont montés sur la paroi de séparation (1') de façon réglable en hauteur.

4. Cabriolet selon la revendication 3,
**caractérisé en ce que**
des consoles (10) de la tringlerie (11) de la capote peuvent être fixées sur les blocs d'appui (9).

5. Cabriolet selon la revendication 4,
**caractérisé en ce que**
les consoles (10) sont déplaçables transversalement et/ou en longitudinalement par rapport aux blocs d'appui (9).

6. Cabriolet selon la revendication 1,
**caractérisé en ce que**
la paroi de séparation (1, 1') est formée par au moins un profilé extrudé en métal léger.

7. Cabriolet selon la revendication 1,
**caractérisé en ce que**
la paroi de séparation (1, 1') est vissée, rivée et/ou soudée sur la structure du véhicule.

8. Cabriolet selon la revendication 4 et la revendication 7,
**caractérisé en ce que**
la paroi de séparation (1, 1') peut être enlevée du véhicule en bloc avec le système de protection contre le renversement et la capote.

9. Cabriolet selon la revendication 6, dans lequel les branches d'un arceau de sécurité (2) sont déplaçables dans des éléments de guidage,
**caractérisé en ce que**
les éléments de guidage sont formés par des empreintes (16) dans la paroi de séparation (1) et par des blocs de renforcement (6) fixés sur la paroi de séparation (1).

10. Cabriolet selon la revendication 6,
**caractérisé en ce que**
des logements (15) pour des enrouleurs automatiques de ceinture de sécurité sont formés sur la paroi de séparation (1, 1').

11. Cabriolet selon la revendication 9,
**caractérisé en ce que**
chaque bloc de renforcement (6) est entouré par une partie de boîtier antérieure (17) solidement assemblée à la paroi de séparation (1, 1').

12. Cabriolet selon la revendication 11,
**caractérisé en ce que**
la partie de boîtier (17), avec une partie inférieure, sert à soutenir le dossier d'un siège de véhicule.

13. Cabriolet selon la revendication 11,
**caractérisé en ce que**
les composants électriques du système de protection contre le renversement et éventuellement aussi du système de capote sont disposés sur la partie de boîtier (17).

14. Cabriolet selon la revendication 9,
**caractérisé en ce que**
le système de protection contre le renversement peut être préassemblé avec la partie de boîtier antérieure (17), qui est alors fixée sur la paroi de séparation (1).
